# EUROPEAN PATENT APPLICATION

(11) **EP 4 477 684 A1**
(43) Date of publication of application: **18.12.2024**
(21) Application number: 23178888.6
(22) Date of filing: 13.06.2023
(51) Int. Cl.: C08G 18/10, C08G 18/32, C08G 18/42, C08G 18/48, C08G 18/73, C09D 175/04

(54) **PENTAMETHYLENE DIISOCYANATE BASED PREPOLYMERS**

(71) Applicant: Covestro Deutschland AG, 51373 Leverkusen (DE)
(72) Inventor: Suetterlin, Jan, 51061 Köln (DE); Fulsche, Thomas, 40764 Langenfeld (Rhld.) (DE)
(74) Representative: Levpat

(57) **Abstract**

The present application provides a process for producing an isocyanate-terminated prepolymer comprising the reaction of a polyisocyanate compound A) with an isocyanate-reactive compound B) and optionally a subsequent step to reduce residual monomer content, wherein
- the polyisocyanate compound A) comprises at least 30 wt.-%, based on the weight of the polyisocyanate compound A), penthamethylene diisocyanate, preferably at least 50 wt.-%, more preferably at least 70 wt.-%, and
- the isocyanate-reactive compound B) comprises at least 80 wt.-%, based on the weight of isocyanate-reactive compounds B), of
(I) poly(1,3-propanediol) with a number average molar mass in the range of from 100 g/mol to 1300 g/mol, or
(II) poly(ε-caprolactone) with an OH-functionality of 2 and a number average molar mass in the range of from 160 g/mol to 800 g/mol, or
(III) any combination of (I) and (II).

## Description

The invention is directed to isocyanate-terminated prepolymers, a process for producing said isocyanate-terminated prepolymers and the use of the inventive isocyanate-terminated prepolymers in a coating composition for coating substrates.

Within the group of isocyanate-terminated prepolymers, prepolymers based on hexamethylene diisocyanate (HDI) are attractive for their low viscosities which enables many different processing options without the need for thinning agents or solvents. The most common polyol type that is used for isocyanate terminated prepolymers are polypropylene glycol polyols. In addition to their high availability, prepolymers based on polypropylene polyols are attractive because they do not crystallize even at low temperatures. However, prepolymers based on other polyol types such as poly(tetrahydrofurane), poly(1,3-propanediol) and poly(ε-caprolactone) have benefits in mechanical properties or UV-resistance. Also, it is beneficial to remove excess of diisocyanate after synthesis to obtain isocyanate prepolymers with low diisocyanate monomer content. Many of such HDI-prepolymers are described in the not yet published application EP22169156.1.

Unfortunately, the preparation of low-monomer-content prepolymers from HDI and poly(tetrahydrofurane), poly(1,3-propanediol) or poly(ε-caprolactone) results in prepolymers that crystallize when stored at lower temperatures, e.g. 5 °C, and do not melt at 23 °C. Crystallization is undesirable because it requires an additional melting step before processing. In case additional melting steps are needed it would at least be desirable to melt at moderate temperatures such as room temperature avoiding the necessity for heating equipment.

WO 2016/116376 A1 discloses how crystallization can be inhibited using polyester polyols with a high content of branched diols. Example 17 in WO 2016/116376 A1 discloses a PDI-based prepolymer that contains poly(ε-caprolactone) with a molar mass of 650 g/mol in combination with such a branched polyester polyol with a molar mass of 431 g/mol. However, using branched polyester polyols according to WO 2016/116376 A1 increases the viscosity of prepolymers.

The present invention has therefore the objective of providing isocyanate-terminated prepolymers with lowered viscosity that melt at 23 °C, preferably do not crystallize when stored at 5 °C.

Subject of the present invention is therefore an isocyanate-terminated prepolymer comprising or consisting of structural units derived from a polyisocyanate compound A) and structural units derived from an isocyanate-reactive compound B), wherein
- the polyisocyanate compound A) comprises at least 30 wt.-%, based on the weight of the polyisocyanate compounds A), pentamethylene diisocyanate, preferably at least 50 wt.-%, more preferably at least 70 wt.-%, and
- the isocyanate-reactive compound B) comprises at least 80 wt.-%, based on the weight of the isocyanate-reactive compounds B),
   (I) poly(1,3-propanediol) with a number average molar mass in the range of from 100 g/mol to 1300 g/mol, or
   (II) poly(ε-caprolactone) with an OH-functionality of 2 and a number average molar mass in the range of from 160 g/mol to 800 g/mol, or
   (III) any mixture of (I) or (II).

In this invention, it was surprisingly found that when combining pentamethylene diisocyanate (PDI) with poly(1,3-propanediol) or poly(ε-caprolactone) in well-defined molar mass ranges, prepolymers with low viscosities are obtained that melt at 23 °C, which means that the melting point is below 23°C. In some embodiments the prepolymers not even crystallize when stored at 5 °C.

Another subject of the invention is a process for producing an isocyanate-terminated prepolymer comprising the reaction of a polyisocyanate compound A) with an isocyanate-reactive compound B) and optionally a subsequent step to reduce residual monomer content, wherein
- the polyisocyanate compound A) comprises at least 30 wt.-%, based on the weight of the polyisocyanate compound A), pentamethylene diisocyanate, preferably at least 50 wt.-%, more preferably at least 70 wt.-%, and
- the isocyanate-reactive compound B) comprises at least 80 wt.-%, based on the weight of isocyanate-reactive compounds B), of
   (I) poly(1,3-propanediol) with a number average molar mass in the range of from 100 g/mol to 1300 g/mol, or
   (II) poly(ε-caprolactone) with an OH-functionality of 2 and a number average molar mass in the range of from 160 g/mol to 800 g/mol, or
   (III) any combination of (I) and (II).

### Polyisocyanate compound A)

The polyisocyanate compound A) used in the inventive process comprises at least 30 wt.-%, based on the weight of the polyisocyanate compound A), of pentamethylene diisocyanate (PDI), preferably 50 wt.-%, more preferably 70 wt.-% and most preferred 100 wt.-% of pentamethylene diisocyanate. Suitable polyisocyanates which can be used as additional polyisocyanates are aliphatic diisocyanates like hexamethylene diisocyanate (HDI), isophorone diisocyanate (IPDI), butylene diisocyanate (BDI), bisisocyanatocyclohexylmethane (HMDI), 2,2,4-trimethylhexamethylene diisocyanate, bisisocyanatomethylcyclohexane, bisisocyanatomethyltricyclodecane, xylene diisocyanate, tetramethylxylylene diisocyanate, norbornane diisocyanate, cyclohexane diisocyanate or diisocyanatododecane, preference being given to hexamethylene diisocyanate (HDI), isophorone diisocyanate (IPDI), butylene diisocyanate (BDI), and bis(isocyanatocyclohexyl)methane (HMDI). Preferred aliphatic diisocyanates are linear diisocyanates, like HDI or BDI.

Further suitable are aromatic diisocyanates like toluene 2,4-diisocyanate (2,4-TDI), toluene 2,6-diisocyanate (2,6-TDI) or methylene diphenyl 2,2'-diisocyanate (2,2'-MDI), methylene diphenyl 2,2'-diisocyanate (2,4'-MDI), methylenediphenyl 4,4'-diisocyanate (4,4'-MDI), or mixtures of at least two of these.

It is further suitable to use diisocyanates with uretdione, isocyanurate, allophanate, urea, biuret, iminooxadiazinedione and / or oxadiazine trione structures which are also called modified diisocyanates. The modified diisocyanates can be obtained from the aliphatic and aromatic diisocyanates mentioned above.

In a preferred embodiment, the diisocyanate comprises at least 70 wt.-% of PDI and up to 30 wt.-% of HDI and/or modified diisocyanate.

### Isocyanate-reactive compound B)

The isocyanate-reactive compounds used for the preparation of the isocyanate-terminated prepolymer comprises at least 80 wt.-%, based on the weight of the isocyanate-reactive compound B), of
(I) poly(1,3-propanediol) with a number average molar mass in the range of from 100 g/mol to 1300 g/mol, preferably 100 g/mol to 1100 g/mol, more preferably 200 g/mol to 900 g/mol, or
(II) poly(ε-caprolactone) with an OH-functionality of 2, preferably started on butanediol, hexanediol, neopentyl glycol and/or diethylene glycol, and a number average molar mass in the range of from 160 g/mol to 800 g/mol, preferably 200 g/mol to 600 g/mol, more preferably 280 g/mol to 600 g/mol,
   or
(III) any combination of (I) and (II).

In this invention the term poly(1,3-propanediol) (I) is used interchangeably with polytrimethylene ether glycol (PO3G) and describes a polyol of formula (i), whereas n denotes an integer from 2 to 24, preferably 2 to 22, more preferably 4 to 10. It can be produced by different methods. One method is ring-opening polymerization from oxetane. However, the more commonly used method is polycondensation of 1,3-propane diol as exemplified by EP3689943A1.

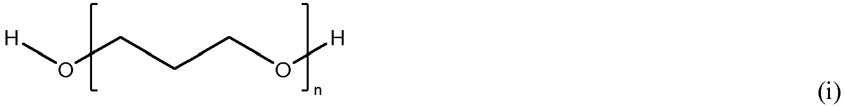

Poly(ε-caprolactone) (II) includes polyols as shown in formula (ii), whereas R denotes the starter without OH groups which is preferably butanediol, hexanediol, neopentyl glycol and/or diethylene glycol, and o and p are independent from each other and integers in the range of from 0 to 3, preferably 1 or 2, wherein the sum of o and p is at least 1.

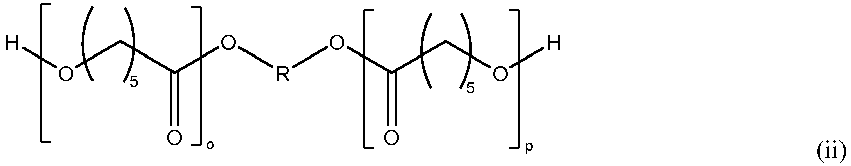

It is preferred that the isocyanate-reactive compound B) comprises at least 90 wt.-%, more preferably at least 95 wt.-% and most preferred 100 wt.-%, based on the weight of the isocyanate-reactive compound B), a compound according to any of (I) to (III).It is also suitable to use further isocyanate-reactive compounds which do not fall under the scope of (I) to (III) like mono- and polyhydric alcohols or mono- and polyfunctional amines that are known per se to the person skilled in the art, and mixtures thereof. Polyhydric alcohols are for example polyether polyols, preferably with a number average molar mass in the range of 200 to 10000 g/mol, more preferred 400 to 2500 g/mol and an OH-functionality of preferably 1.8 to 6, more preferably 1.9 to 2.1, and most preferably 1.9 to 2.0. The polyether polyols are obtained by ring-opening polymerization of cyclic ethers in the presence of starter compounds with hydroxyl groups.

Suitable starter compounds with hydroxyl groups are water or compounds with an OH-functionality of 2 to 6, like propylene glycol, 1,3-propanediol, ethylene glycole, diethylene glycol, dipropylene glycol, 1,2-butanediol, 1,3-butanediol, 1,4-butanediol, hexanediol, pentanediol, 3-methylen-1,5-pentanediol, 1,12-dodecanediol, glycerine, trimethylolpropane, triethanolamine, pentaerythritol, sorbitol, sucrose, hydroquinone, catechol, resorcinol, bisphenol F, bisphenol A, Benzene-1,3,5-triol, or condensation products of formaldehyde and phenol comprising methylol groups. The starter compounds can be used alone or as mixture. The starter compound is preferably selected from the group consisting of propylene glycol, 1,3-propanediol, glycerine, trimethylolpropane and pentaerythritol.

Suitable cyclic ethers are ethylene oxide, propylene oxide, 1,2-butylene oxide, 2,3-butylene oxide, 2-methyl-1,2-propylene oxide, 1,2-pentylene oxide, 2,3-pentylene oxide, 2-methyl-1,2-butylene oxide, 3-methyl-1,2-butylene oxide, 1,2-hexylene oxide, 2,3-hexylene oxide, 3,4-hexylene oxide, 2-methyl-1,2-pentylene oxide, 4-methyl-1,2-pentylene oxide, 2-ethyl-1,2-butylene oxide, 1,2-heptylene oxide, 1,2-octylene oxide, 1,2-nonylene oxide, 1,2-decylene oxide, 1,2-undecylene oxide, 1,2-dodecylene oxide, 4-methyl-1,2-pentylene oxide, butadiene monoxide, isoprene monoxide, cyclopentene oxide, cyclohexene oxide, cycloheptene oxide, cyclooctene oxide, styrene oxide, methyl styrene, pinene oxide, derivatives of glycidol, like methyl glycidyl ether, ethyl glycidyl ether, 2-ethylhexyl glycidyl ether, allyl glycidyl ether, trimethylene oxide, tetramethylene oxide (THF), pentamethylene oxide, hexamethylene oxide, heptamethylene oxide and decamethylene oxide. It is also possible to copolymerize more than one of said cyclic ethers. The cyclic ether is preferably propylene oxide, ethylene oxide and/or tetramethylene oxide (THF), more preferably propylene oxide and/or tetramethylene oxide (THF).

It is also suitable to use so-called chain extender. Suitable chain extenders are preferably aliphatic diols having 2 to 14 carbon atoms, such as for example ethanediol, butane-1,4-diol, hexane-1,6-diol, octane-1,8-diol, decane-1,10-diol, dodecane-1,12-diol, diethylene glycol and dipropylene glycol. However, also suitable are diesters of terephthalic acid with glycols having 2 to 4 carbon atoms, such as for example terephthalic acid bis-ethylene glycol or terephthalic acid bis-butane-1,4-diol, hydroxyalkylene ethers of hydroquinone, such as for example 1,4-di(hydroxyethyl)hydroquinone and ethoxylated bisphenols. Particular preference is given to using ethanediol, butane-1,4-diol, hexane-1,6-diol and 1,4-di(hydroxyethyl)hydroquinone. Mixtures of the abovementioned chain extenders may also be used.

In a preferred embodiment, the isocyanate-reactive compound B) is free of polyester polyols different than (II).

It is preferred that the polyisocyanate compound A) and the isocyanate-reactive compound B) are reacted in an NCO / OH equivalent ratio of 1.5: 1 to 20: 1, preferably 2: 1 to 18: 1 and most preferably 4: 1 to 16: 1. The reaction takes place at temperatures of 20 °C to 200 °C, preferably 40 °C to 140 °C, more preferably 50 °C to 120 °C. Preferably, when using an excess of polyisocyanate compound A) of more than 2: 1, excess monomeric polyisocyanate is removed after reaction by distillative or extractive methods known in the art (e. g. thin film evaporation).

In the process for producing the isocyanate-terminated prepolymer, further additives can be used which may also remain in the isocyanate-terminated prepolymer after the process. Preferably, the amount of additives in the process is in the range of from 0 to 5 wt.-%, based on the sum of wt.-% of polyisocyanate compound A), isocyanate-reactive compound B) and additives, more preferably 0 to 4 wt.-%, most preferred 0 to 2 wt.-%. Examples of additives are light stabilizers such as UV absorbers and sterically hindered amines (HALS), further stabilizers such as acid stabilizer, defoaming, anticrater and / or wetting agents, gradient agents, film-forming aids, reactive diluents, biocides, solvents or substances for rheology control. It is preferred to use UV absorbers such as substituted benztriazoles, S-phenyltriazines or oxalanilids and sterically hindered amines in particular with 2,2,6,6-tetramethyl-piperidyl structures - referred to as HALS as light stabilizers.

Stabilizers such as radical scavengers and other polymerization inhibitors such as sterically hindered phenols stabilize paint components during storage and are intended to prevent discoloration during curing. Wetting and gradient agents improve surface wetting and/or the gradient of paints. Examples are fluorosurfactants, silicone surfactants and special polyacrylates. Rheology-controlling additives are important to control the properties of the two-component system during application and in the progression phase on the substrate and are known, for example, from the patent specifications WO 9422968, EP0276501, EP0249201 or WO 9712945. Furthermore, water scavengers such as triethyl orthoformate, toluene sulfoisocyanate, monooxazolidines or molecular sieves, and hydrolysis inhibitors such as carbodimides can be used. As acid stabilizers it is preferred to use phosphoric acid, dibutyl phosphate, isophtaloyl chloride and/or benzoyl chloride.

Examples of organic solvents are ketones such as acetone, methyl ethyl ketone or hexanone, esters such as ethyl acetate, butyl acetate, methoxyproyl acetate, substituted glycols and other ethers, aromatics such as xylene or solventnaphtha such as Exxon-Chemie and mixtures of said solvents. If the NCO-reactive part of the composition is present as an aqueous dispersion, water is also suitable as a solvent or diluent.

Suitable catalysts are for example organotin compounds, bismuth compounds, zinc compounds, titanium compounds, zirconium compounds or aminic catalysts. If one or more catalysts are used, preferably 0.001 wt.-% to 5 wt.-%, more preferably 0.002 wt.-% to 2 wt.-% catalyst, based on the total weight of the isocyanate-terminated prepolymer, are used.

In a preferred embodiment, the process for producing the isocyanate-terminated prepolymer comprises the reaction of
20 to 96 wt.-%, preferably 40 to 96 wt.-%, of a polyisocyanate compound A), comprising at least 30 wt.-%, based on the weight of the polyisocyanate compound A), penthamethylene diisocyanate, preferably at least 50 wt.-%, more preferably at least 70 wt.-%,
   with
4 to 80 wt.-%, preferably 4 to 60 wt.-%, of an isocyanate-reactive compound B), comprising at least 80 wt.-%, based on the weight of isocyanate-reactive compounds B), of
   (I) poly(1,3-propanediol) with a number average molar mass in the range of from 100 g/mol to 1300 g/mol, or
   (II) poly(ε-caprolactone) with an OH-functionality of 2 and a number average molar mass in the range of from 160 g/mol to 800 g/mol, or
   (III) any combination of (I) and (II),
in the presence of
0 to 5 wt.-% of additives, preferably comprising a catalyst,
wherein the sum of wt.-% of polyisocyanate compound A), isocyanate-reactive compound B) and additives equals 100 wt.-%, and

Optionally a subsequent step for reducing residual monomer content, preferably by thin-film evaporation.

The inventive isocyanate-terminated prepolymer can be used in coating compositions for coating substrates, preferably substrates that are objects exposed to (repeated) mechanical stress like aircraft, helicopter and automobiles, especially very fast moving parts such as rotor blades of wind turbines, rotor blades of helicopters, or ship's propellers, or for applications that need high elongation coatings like for gap-bridging purposes such as car park coating (flooring), water-proofing of roofs and balconies, or for protective purposes such as corrosion protection of infrastructures, or pipe coatings.

The coating composition can be applied by conventional application methods. Examples of application methods include brush-on, brushing, squeegeeing, rolling, and spraying, roll-on application is preferred for construction application.

Suitable coating compositions can be two-component (2K) coatings comprising at least the inventive isocyanate-terminated prepolymer and an isocyanate reactive component such as polyols or polyamines.

A specific suitable example of coating compositions where the isocyanate reactive component is an polyamine are two-component (2K) coatings comprising at least one polyaspartatic ester of the general formula (iii) 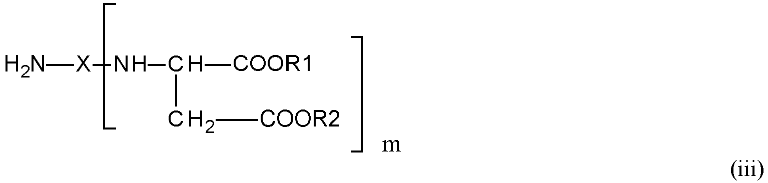 in which
X is an m-valent organic radical, optionally containing a heteroatom, obtained by removal of a primary amino group from a corresponding polyamine having a molecular weight of from 60 to 6000 g/mol and containing a (cyclo)aliphatically and/or araliphatically bonded primary amino group, and optionally comprising further functional groups which are reactive toward isocyanate groups and/or which are inert at temperatures up to 100°C,
R1 and R2 are identical or different organic radicals,
m is an integer >1,
and an isocyanate-terminated prepolymer according to the invention.

### Experimental

### Methods

Unless stated otherwise all percentages are weight percentages.

Unless stated otherwise viscosities were determined at 23 °C and a shear rate of 50/s according to DIN 53019.

Isocyanate contents were determined according to DIN-EN ISO 11909.

Residual content of diisocyanates was determined according to DIN EN ISO 10283.

For testing the crystallization behavior 50 mL of prepolymer were added to a 100 mL glass bottle and stored at 5 °C. After 1 and 4 days of storage time the samples were visually assessed for the formation of crystals or white solids, respectively. If crystallization was found the sample was subsequently stored at 23 °C for a maximum of 24 h. If no crystals or white solids remained and the sample was a transparent liquid again this test was considered to "melt at 23 °C".

Unless stated otherwise, the molar mass is the number average molar mass determined by gel permeation chromatography according to DIN 55672-1 (August 2007).

### Materials and Abbreviations

HDI: Hexamethylenediisocyanate (Desmodur^{®} H, Covestro Deutschland AG)
PDI: Pentamethylenediisocyanate (Covestro Deutschland AG)
PTHF: difunctional poly(tetrahydrofurane), products with number average molar masses of 250, 1000, 1400 and 2000 g/mol were purchased from BASF. Poly(tetrahydrofurane) with an average molar mass of 650 g/mol was purchased from Merck.
PO3G: poly(1,3-propanediol)
PCL: poly(ε-caprolactone)
PPG: poly(propyleneglycol)
Velvetol^{®} H250: difunctional poly(1,3-propanediol) with a number average molar mass of 250 g/mol was purchased from Alessa GmbH.
Velvetol^{®} H500: difunctional poly(1,3-propanediol) with a number average molar mass of 500 g/mol was purchased from Alessa GmbH.
Ecoprol^{®} H1000: difunctional poly(1,3-propanediol) with a number average molar mass of 1000 g/mol (OH-number 112 mg KOH/g) was provided by SK Chemicals.
Velvetol^{®} H1400: difunctional poly(1,3-propanediol) with a number average molar mass of 1400 g/mol was purchased from Alessa GmbH.
Ecoprol^{®} H2000: difunctional poly(1,3-propanediol) with a number average molar mass of 2000 g/mol (OH-number 56 mg KOH/g) was provided by SK Chemicals.
CAPA^{®} 2043: difunctional poly(ε-caprolactone) with a number average molar mass of 400 g/mol started on 1,4-Butanediol was provided by Ingevity.
CAPA^{®} 2067A: difunctional poly(ε-caprolactone) with a number average molar mass of 650 g/mol started on 1,6-Hexanediol was provided by Ingevity.
CAPA^{®} 2101 A: difunctional poly(ε-caprolactone) with a number average molar mass of 1000 g/mol started on 2,2-dimethylpropane-1,3-diol was provided by Ingevity.
CAPA^{®} 3031: trifunctional poly(ε-caprolactone) with a number average molar mass of 300 g/mol started on Trimethylolpropane was provided by Ingevity.
B1: difunctional polypropylene glycol with a number average molar mass of 218 g/mol.

### Branched polyester polyol 1

Polyester polyol A1 as described in WO 2016/116376 A1 at page 15, lines 3 to 10.

### Example 1 (comparative)

3360 g of HDI were heated to 80 °C. Over the course of 1 h 454 g of Velvetol H250 were added dropwise while stirring. The reaction mixture stirred at 80 °C for another 1.5 h until an NCO content of 39.4% was reached. Excess HDI was removed via distillation employing a short path evaporator (pre-evaporator at 130 °C, main evaporator at 120 °C, pressure of 0.5 mbar).

### Example 1 (comparative)

3360 g of HDI were heated to 80 °C. Over the course of 1 h 454 g of Velvetol H250 were added dropwise while stirring. The reaction mixture was stirred at 80 °C for another 1.5 h until an NCO content of 39.4% was reached. Excess HDI was removed via distillation employing a short path evaporator (pre-evaporator at 130 °C, main evaporator at 120 °C, pressure of 0.5 mbar)

### Example 2 (comparative)

2520 g of HDI were heated to 80 °C. Over the course of 1 h 833.3 g of Velvetol H500 were added dropwise while stirring. The reaction mixture was stirred at 80 °C for another 2.5 h until an NCO content of 33.6% was reached. Excess HDI was removed via distillation employing a short path evaporator (pre-evaporator at 130 °C, main evaporator at 120 °C, pressure of 0.4 mbar).

### Example 3a (comparative)

1638 g of HDI were heated to 80 °C. Over the course of 1 h 975 g of Ecoprol H1000 were added dropwise while stirring. The reaction mixture was stirred at 80 °C for another 2.5 h until an NCO content of 28.0% was reached. Excess HDI was removed via distillation employing a short path evaporator (pre-evaporator at 130 °C, main evaporator at 120 °C, pressure of 0.1 mbar).

### Example 3b (comparative)

840 g of HDI were heated to 80 °C. Over the course of 1 h 500 g of Ecoprol H1000 were added dropwise while stirring. The reaction mixture was stirred at 80 °C for another 2 h until an NCO content of 28.0% was reached. Excess HDI was removed via distillation employing a short path evaporator (pre-evaporator at 130 °C, main evaporator at 120 °C, pressure of 0.05 mbar).

### Example 4 (comparative)

675.5 g of HDI were heated to 80 °C. Over the course of 1 h 500 g of Velvetol H1400 were added dropwise while stirring. The reaction mixture was stirred at 80 °C for another 2 h until an NCO content of 25.8% was reached. Excess HDI was removed via distillation employing a short path evaporator (pre-evaporator at 130 °C, main evaporator at 120 °C, pressure of 0.06 mbar).

### Example 5 (comparative)

840 g of HDI were heated to 80 °C. Over the course of 1 h 1000 g of Ecoprol H2000 were added dropwise while stirring. The reaction mixture was stirred at 80 °C for another 5 h until an NCO content of 20.5% was reached. Excess HDI was removed via distillation employing a short path evaporator (pre-evaporator at 130 °C, main evaporator at 120 °C, pressure of 0.1 mbar).

### Example 6 (comparative)

3080 g of PDI were heated to 80 °C. Over the course of 1 h 152 g of 1,3-Propanediol were added dropwise while stirring. The reaction mixture was stirred at 80 °C for another 2.5 h until an NCO content of 47% was reached. Excess PDI was removed via distillation employing a short path evaporator (pre-evaporator at 130 °C, main evaporator at 120 °C, pressure of 0.06 mbar).

### Example 7 (inventive)

3080 g of PDI were heated to 80 °C. Over the course of 1 h 454.3 g of Velvetol H250 were added dropwise while stirring. The reaction mixture was stirred at 80 °C for another 2.5 h until an NCO content of 42.7% was reached. Excess PDI was removed via distillation employing a short path evaporator (pre-evaporator at 130 °C, main evaporator at 120 °C, pressure of 0.05 mbar).

### Example 8 (inventive)

2217.6 g of PDI were heated to 80 °C. Over the course of 1 h 681.4 g of Velvetol H250 were added dropwise while stirring. The reaction mixture was stirred at 80 °C for another 1.75 h until an NCO content of 32.9% was reached. Excess PDI was removed via distillation employing a short path evaporator (pre-evaporator at 130 °C, main evaporator at 120 °C, pressure of 0.06 mbar). 2.9 g of Irganox E 201 were added and the mixture was slowly agitated until the Irganox dissolved.

### Example 9 (inventive)

924 g of PDI were heated to 80 °C. Over the course of 1 h 454.4 g of Velvetol H250 were added dropwise while stirring. The reaction mixture was stirred at 80 °C for another 2 h until an NCO content of X% was reached. Excess PDI was removed via distillation employing a short path evaporator (pre-evaporator at 130 °C, main evaporator at 120 °C, pressure of 0.3 mbar).

### Example 10 (inventive)

2310 g of PDI were heated to 80 °C. Over the course of 1 h 833.3 g of Velvetol H500 were added dropwise while stirring. The reaction mixture was stirred at 80 °C for another 1 h until an NCO content of 35.8% was reached. Excess PDI was removed via distillation employing a short path evaporator (pre-evaporator at 130 °C, main evaporator at 120 °C, pressure of 0.06 mbar).

### Example 11a (inventive)

1155 g of PDI were heated to 80 °C. Over the course of 1.5 h 750 g of Ecoprol H1000 were added dropwise while stirring. The reaction mixture was stirred at 80 °C for another 1.75 h until an NCO content of 29,2% was reached. Excess PDI was removed via distillation employing a short path evaporator (pre-evaporator at 130 °C, main evaporator at 120 °C, pressure of 0.06 mbar).

### Example 11b (inventive)

1155 g of PDI were heated to 80 °C. Over the course of 1.5 h 750 g of Ecoprol H1000 were added dropwise while stirring. The reaction mixture was stirred at 80 °C for another 5 h until an NCO content of 26.6% was reached. Excess PDI was removed via distillation employing a short path evaporator (pre-evaporator at 130 °C, main evaporator at 120 °C, pressure of 0.4 mbar).

### Example 12 (inventive)

619 g of PDI were heated to 80 °C. Over the course of 1 h 500 g of Velvetol H1400 were added dropwise while stirring. The reaction mixture was stirred at 80 °C for another 1.75 h until an NCO content of 29.7% was reached. Excess PDI was removed via distillation employing a short path evaporator (pre-evaporator at 130 °C, main evaporator at 120 °C, pressure of 0.05 mbar).

### Example 13 (inventive)

577.5 g of PDI were heated to 80 °C. Over the course of 1.5 h 750 g of Ecoprol H2000 were added dropwise while stirring. The reaction mixture was stirred at 80 °C for another 2.5 h until an NCO content of 21.4% was reached. Excess PDI was removed via distillation employing a short path evaporator (pre-evaporator at 130 °C, main evaporator at 120 °C, pressure of 0.06 mbar).

### Example 14 (comparative)

1680 g of HDI were heated to 80 °C. Over the course of 1 h 250 g of PTHF 250 were added dropwise while stirring. The reaction mixture was stirred at 80 °C for another 2 h until an NCO content of 38.6% was reached. Excess HDI was removed via distillation employing a short path evaporator (pre-evaporator at 130 °C, main evaporator at 120 °C, pressure of 0.08 mbar).

### Example 15 (comparative)

1680 g of HDI were heated to 80 °C. Over the course of 1 h 650 g of PTHF 650 were added dropwise while stirring. The reaction mixture was stirred at 80 °C for another 2 h until an NCO content of 32.1% was reached. Excess HDI was removed via distillation employing a short path evaporator (pre-evaporator at 130 °C, main evaporator at 120 °C, pressure of 0.08 mbar).

### Example 16 (comparative)

2520 g of HDI were heated to 80 °C. Over the course of 1 h 1500 g of PTHF 1000 were added dropwise while stirring. The reaction mixture was stirred at 80 °C for another 1.25 h until an NCO content of 27.9% was reached. Excess HDI was removed via distillation employing a short path evaporator (pre-evaporator at 130 °C, main evaporator at 120 °C, pressure of 0.08 mbar).

### Example 17 (comparative)

840 g of HDI were heated to 80 °C. Over the course of 1 h 700 g of PTHF 1400 were added dropwise while stirring. The reaction mixture was stirred at 80 °C for another 2 h until an NCO content of 24.3% was reached. Excess HDI was removed via distillation employing a short path evaporator (pre-evaporator at 130 °C, main evaporator at 120 °C, pressure of 0.03 mbar).

### Example 18 (comparative)

630 g of HDI were heated to 80 °C. Over the course of 0.5 h 750 g of PTHF 2000 were added dropwise while stirring. The reaction mixture was stirred at 80 °C for another 4.5 h until an NCO content of 20.4% was reached. Excess HDI was removed via distillation employing a short path evaporator (pre-evaporator at 130 °C, main evaporator at 120 °C, pressure of 0.06 mbar).

### Example 19 (comparative)

3080 g of PDI were heated to 80 °C. Over the course of 1 h 500 g of PTHF 250 were added dropwise while stirring. The reaction mixture was stirred at 80 °C for another 2 h until an NCO content of 41.9% was reached. Excess PDI was removed via distillation employing a short path evaporator (pre-evaporator at 130 °C, main evaporator at 120 °C, pressure of 0.06 mbar).

### Example 20 (comparative)

770 g of PDI were heated to 80 °C. Over the course of 1 h 500 g of PTHF 1000 were added dropwise while stirring. The reaction mixture was stirred at 80 °C for another 5 h until an NCO content of 29.4% was reached. Excess PDI was removed via distillation employing a short path evaporator (pre-evaporator at 130 °C, main evaporator at 120 °C, pressure of 0.08 mbar).

### Example 21 (comparative)

577.5 g of PDI were heated to 80 °C. Over the course of 1 h 750 g of PTHF 2000 were added dropwise while stirring. The reaction mixture was stirred at 80 °C for another 1 h until an NCO content of 21.2% was reached. Excess PDI was removed via distillation employing a short path evaporator (pre-evaporator at 130 °C, main evaporator at 120 °C, pressure of 0.05 mbar).

### Example 22 (comparative)

3360 g of HDI were heated to 80 °C. Over the course of 1 h 813.6 g of CAPA 2043 were added dropwise while stirring. The reaction mixture was stirred at 80 °C for another 1 h until an NCO content of 36.1% was reached. Excess HDI was removed via distillation employing a short path evaporator (pre-evaporator at 130 °C, main evaporator at 120 °C, pressure of 0.06 mbar).

### Example 23 (comparative)

Example 3 from page 18, lines 25 to 35 of WO 2016/116376 A1.

### Example 24 (comparative)

2520 g of HDI were heated to 80 °C. Over the course of 1.5 h 1500 g of CAPA 2101A were added dropwise while stirring. The reaction mixture was stirred at 80 °C for another 1.5 h until an NCO content of 28.1% was reached. Excess HDI was removed via distillation employing a short path evaporator (pre-evaporator at 130 °C, main evaporator at 120 °C, pressure of 0.08 mbar).

### Example 25 (comparative)

2215.4 g of PDI were heated to 80 °C. Over the course of 0.5 h 584.6 g of CAPA 2043 were added dropwise while stirring. The reaction mixture was stirred at 80 °C for another 1 h until an NCO content of 38.0% was reached. Excess PDI was removed via distillation employing a short path evaporator (pre-evaporator at 130 °C, main evaporator at 120 °C, pressure of 0.2 mbar).

### Example 26 (comparative)

1119.6 g of PDI were heated to 90 °C. Over the course of 1 h 480.4 g of CAPA 2067A were added dropwise while stirring. The reaction mixture was stirred at 100 °C for another 2 h until an NCO content of 34% was reached. Excess PDI was removed via distillation employing a short path evaporator (pre-evaporator at 130 °C, main evaporator at 120 °C, pressure of 0.4 mbar).

### Example 27 (comparative)

577.5 g of PDI were heated to 80 °C. Over the course of 1 h 750 g of CAPA 2101A were added dropwise while stirring. The reaction mixture was stirred at 80 °C for another 1 h until an NCO content of 28.5% was reached. Excess PDI was removed via distillation employing a short path evaporator (pre-evaporator at 130 °C, main evaporator at 120 °C, pressure of 0.06 mbar).

### Example 28 (comparative)

1770.5 g of HDI were heated to 80 °C. Over the course of 0.5 h 229.5 g of B1 were added dropwise while stirring. The reaction mixture was stirred at 80 °C for another 4 h until an NCO content of 39.6% was reached. Excess HDI was removed via distillation employing a short path evaporator (pre-evaporator at 130 °C, main evaporator at 120 °C, pressure of 0.05 mbar).

### Example 29 (comparative)

1622.6 g of PDI were heated to 80 °C. Over the course of 0.5 h 229.5 g of B1 were added dropwise while stirring. The reaction mixture was stirred at 80 °C for another 4 h until an NCO content of 43.5% was reached. Excess PDI was removed via distillation employing a short path evaporator (pre-evaporator at 130 °C, main evaporator at 120 °C, pressure of 0.4 mbar).

### Example 30 (comparative)

3673.2 g of HDI were heated to 80 °C. Over the course of 0.5 h 626.8 g of branched polyester polyol 1 were added dropwise while stirring. The reaction mixture was stirred at 100 °C for another 0.75 h until an NCO content of 40.0% was reached. Excess HDI was removed via distillation employing a short path evaporator (pre-evaporator at 130 °C, main evaporator at 120 °C, pressure of 0.5 mbar).

### Example 31 (comparative)

3478.2 g of HDI were heated to 80 °C. Over the course of 0.75 h 229.5 g of CAPA 3031 were added dropwise while stirring. The reaction mixture was stirred at 80 °C for another 3 h until an NCO content of 40.2% was reached. Excess HDI was removed via distillation employing a short path evaporator (pre-evaporator at 130 °C, main evaporator at 120 °C, pressure of 0.4 mbar).

### Example 32 (comparative)

3.3 g of a prepolymer according to inventive example 11 was mixed with 6.7 g of a prepolymer from comparative example 3.

### Example 33 (comparative)

5.0 g of a prepolymer according to inventive example 11 was mixed with 5.0 g of a prepolymer from comparative example 3.

### Example 34 (comparative)

6.7 g of a prepolymer according to inventive example 11 was mixed with 3.3 g of a prepolymer from comparative example 3.

### Example 35 (comparative)

3.3 g of a prepolymer according to inventive example 11 was mixed with 6.7 g of a prepolymer from comparative example 20.

### Example 36 (comparative)

5.0 g of a prepolymer according to inventive example 11 was mixed with 5.0 g of a prepolymer from comparative example 20.

### Example 37 (comparative)

6.7 g of a prepolymer according to inventive example 11 was mixed with 3.3 g of a prepolymer from comparative example 20.

### Example 38 (inventive)

2310 g of PDI and 840 g of HDI were heated to 80 °C. Over the course of 1 h 454.2 g of Velvetol H250 were added dropwise while stirring. The reaction mixture was stirred at 80 °C for another 3 h until an NCO content of 42.1% was reached. Excess PDI was removed via distillation employing a short path evaporator (pre-evaporator at 130 °C, main evaporator at 120 °C, pressure of 0.05 mbar).

### Example 39 (inventive)

577.5 g of PDI and 210 g of HDI were heated to 80 °C. Over the course of 1 h 500 g of Ecoprol H1000 were added dropwise while stirring. The reaction mixture was stirred at 80 °C for another 3.5 h until an NCO content of 29.5% was reached. Excess PDI was removed via distillation employing a short path evaporator (pre-evaporator at 130 °C, main evaporator at 120 °C, pressure of 0.05 mbar).

**Table 1: Summary of prepolymer examples and their properties**

| Example | Diisocyanate | Polyol | Polyol molar mass [g/mol] | NCO/OHratio | NCOcontent [%] | Viscosity at 23 °C and 50/s [mPas] | Residual monomer content [%] | Solid after 4 d at 5 °C? | Melting at 23 °C? |
|---|---|---|---|---|---|---|---|---|---|
| 1 (C) | HDI | PO3G-diol | 250 | 10.0 | 13.65 | 950 | 0.07 | Yes | No |
| 2 (C) | HDI | PO3G-diol | 500 | 10.0 | 8.6 | 1141 | 0.10 | Yes | No |
| 3a (C) | HDI | PO3G-diol | 1000 | 10.0 | 5.8 | 1670 | 0.07 | Yes | No |
| 3b (C) | HDI | PO3G-diol | 1000 | 10.0 | 5.8 | 1670 | 0.07 | Yes | No |
| 4 (C) | HDI | PO3G-diol | 1400 | 10.4 | 5.5 | 2320 | 0.09 | Yes | No |
| 5 (C) | HDI | PO3G-diol | 2000 | 10.0 | 3.3 | 4520 | 0.03 | Yes | No |
| 6 (C) | PDI | 1,3-Propanediol | 76.09 | 10.0 | 21.0 | 125 (80 °C) | 0.08 | Yes | No |
| 7 (I) | PDI | PO3G-diol | 250 | 10.0 | 14.7 | 942 | 0.11 | No | * |
| 8 (I) | PDI | PO3G-diol | 250 | 4.8 | 13.6 | 1605 | 0.24 | No | * |
| 9 (I) | PDI | PO3G-diol | 250 | 3.0 | 11.9 | 2528 | 0.07 | No | * |
| 10 (1) | PDI | PO3G-diol | 500 | 10.0 | 9.1 | 1155 | 0.10 | No | * |
| 11a (I) | PDI | PO3G-diol | 1000 | 10.0 | 5.9 | 1630 | 0.05 | Yes | Yes |
| 11b (I) | PDI | PO3G-diol | 1000 | 10.0 | 5.7 | 1650 | 0.05 | Yes | Yes |
| 12 (C) | PDI | PO3G-diol | 1400 | 10.4 | 5.3 | 2545 | 0.07 | Yes | No |
| 13 (C) | PDI | PO3G-diol | 2000 | 10.0 | 3.2 | 4701 | 0.03 | Yes | No |
| 14 (C) | HDI | PTHF-diol | 250 | 10.0 | 13.4 | 955 | 0.08 | Yes | No |
| 15 (C) | HDI | PTHF-diol | 650 | 10.0 | 7.6 | 1610 | 0.04 | Yes | No |
| 16 (C) | HDI | PTHF-diol | 1000 | 10.0 | 5.7 | 2200 | 0.06 | Yes | No |
| 17 (C) | HDI | PTHF-diol | 1400 | 10.0 | 4.4 | 4882 | 0.03 | Yes | No |
| 18 (C) | HDI | PTHF-diol | 2000 | 10.0 | 3.3 | 2905 (40 °C) | 0.03 | Yes | No |
| 19 (C) | PDI | PTHF-diol | 250 | 10.0 | 14.5 | 932 | 0.13 | Yes | No |
| 20 (C) | PDI | PTHF-diol | 1000 | 10.0 | 6.0 | 2160 | 0.04 | Yes | No |
| 21 (C) | PDI | PTHF-diol | 2000 | 10.0 | 3.2 | 8370 | 0.06 | Yes | No |
| 22 (C) | HDI | PCL-diol | 400 | 10.0 | 10.7 | 1545 | 0.53 | Yes | No |
| 23 (C) | HDI | PCL-diol | 650 | 15.0 | 8.1 | n.d. | 0.13 | Yes | No |
| 24 (C) | HDI | PCL-diol | 1000 | 10.0 | 5.8 | 3500 | 0.03 | Yes | No |
| 25 (I) | PDI | PCL-diol | 400 | 10.0 | 11.0 | 1500 | 0.05 | No | * |
| 26 (I) | PDI | PCL-diol | 650 | 10.0 | 8.4 | 2170 | 0.08 | Yes | Yes |
| 27 (C) | PDI | PCL-diol | 1000 | 10.0 | 5.8 | 5340 | 0.05 | Yes | no |
| 28 (C) | HDI | PPG-diol | 218 | 10.0 | 13.5 | 2450 | 0.03 | No | * |
| 29 (C) | PDI | PPG-diol | 218 | 10.0 | 15.1 | 2355 | 0.04 | No | * |
| 30 (C) | HDI | Branched polyester diol 1 | 431 | 10.0 | 10.3 | 3425 | No | No | * |
| 31 (C) | HDI | PCL-triol | 300 | 10.0 | 14.2 | 15036 | No | No | * |

| | | | | | | | | | |
|---|---|---|---|---|---|---|---|---|---|
| * Prepolymers that did not solidify when stored at 5 °C could not be tested for melting at 23 °C. They automatically passed this test. | | | | | | | | | |

**Table 2: Summary of prepolymer blends and their properties**

| Example | Diisocyanate | Polyol | Polyol molar mass [g/mol] | NCO/OHratio | NCOcontent [%] | Viscosity at 23 °C and 50/s [mPas] | Residual monomer content [%] | Solid after 4 d at 5 °C? | Melting at 23 °C? |
|---|---|---|---|---|---|---|---|---|---|
| 32 (C) | HDI+PDI | PO3G-diol | 1000 | 10.0 | n.d. | n.d. | n.d. | yes | No |
| 33 (C) | HDI+PDI | PO3G-diol | 1000 | 10.0 | n.d. | n.d. | n.d. | yes | No |
| 34 (C) | HDI+PDI | PO3G-diol | 1000 | 10.0 | n.d. | n.d. | n.d. | yes | No |
| 35 (C) | PDI | PO3G-diol + PTHF-diol | 1000 | 10.0 | n.d. | n.d. | n.d. | yes | No |
| 36 (C) | PDI | PO3G-diol + PTHF-diol | 1000 | 10.0 | n.d. | n.d. | n.d. | yes | No |
| 37 (C) | PDI | PO3G-diol + PTHF-diol | 1000 | 10.0 | n.d. | n.d. | n.d. | yes | No |
| 38 (I) | HDI+ PDI | PO3G-diol | 250 | 10.0 | 14.3 | 840 | 0.07 | No | * |
| 39 (I) | HDI+ PDI | PO3G-diol | 1000 | 10.0 | tbd | tbd | 0.08 | yes | yes |

| | | | | | | | | | |
|---|---|---|---|---|---|---|---|---|---|
| * Prepolymers that did not solidify when stored at 5 °C could not be tested for melting at 23 °C. They automatically passed this test. | | | | | | | | | |

Comparative examples 1-5, 14-18 and 22-24 demonstrate that prepolymers from HDI with PTHF, PO3G or PCL diols solidify at lower temperatures and do not melt at room temperature (23 °C). However, inventive examples 7-11 and 25-26 show that PDI based prepolymers with PO3G or PCL diols either do not crystallize at 5 °C or at least melt at 23 °C when the molar masses of the PO3G or PCL diols are selected within a defined range that is unique to the polyol type. Especially, for PO3G polyols it becomes apparent that there is both a lower and upper limit of polyol molar mass. Inventive example 11a and its replicate 11b show that the result was reproducible close to the upper limit. Inventive examples 7-9 demonstrate that the effect is valid for a range of NCO/OH-ratios during synthesis.

Surprisingly, the suppression of crystallization was not found for prepolymers from PDI with PTHF. Comparative examples 14-21 show that both HDI and PDI prepolymers with PTHF do crystallize at 5 °C without melting at 23 °C irrespective of the PTHF molar mass used for the synthesis of the prepolymers.

Comparative examples 30 and 31 show that crystallization can be suppressed by using branched polyester polyols or multifunctional polyester polyols but these prepolymers have significantly higher viscosities than prepolymers with unbranched polyester diols.

Comparative examples 32-37 show that cold blends of inventive PDI-based prepolymers with non-inventive HDI-based prepolymers do not successfully suppress crystallization. In comparison, inventive examples 38 and 39 show that employing mixtures of HDI and PDI during synthesis (hot blends) do show the desired effect.

## Claims

1. Isocyanate-terminated prepolymer comprising or consisting of structural units derived from a polyisocyanate compound A) and structural units derived from an isocyanate-reactive compound B), wherein
- the polyisocyanate compound A) comprises at least 30 wt.-%, based on the weight of the polyisocyanate compounds A), pentamethylene diisocyanate, preferably at least 50 wt.-%, more preferably at least 70 wt.-%, and
- the isocyanate-reactive compound B) comprises at least 80 wt.-%, based on the weight of the isocyanate-reactive compounds B),
(I) poly(1,3-propanediol) with a number average molar mass in the range of from 100 g/mol to 1300 g/mol, or
(II) poly(ε-caprolactone) with an OH-functionality of 2 and a number average molar mass in the range of from 160 g/mol to 800 g/mol, or
(III) any mixture of (I) or (II).

2. Isocyanate-terminated prepolymer as claimed in claim 1, wherein (I) is a poly(1,3-propanediol) with a number average molar mass in the range of from 100 g/mol to 1100 g/mol.

3. Isocyanate-terminated prepolymer as claimed in claim 1, wherein (I) is a poly(1,3-propanediol) with a number average molar mass in the range of from 200 g/mol to 900 g/mol.

4. Isocyanate-terminated prepolymer as claimed in claim 1, wherein (II) is a poly(ε-caprolactone) with a number average molar mass in the range of from 160 g/mol to 600 g/mol.

5. Isocyanate-terminated prepolymer as claimed in any of claims 1 to 4, wherein the residual monomer content is 1% or less, preferably 0.5% or less, more preferably 0.3% or less.

6. Isocyanate-terminated prepolymer as claimed in any of claims 1 to 5, wherein the isocyanate-reactive compound B) is free of polyester polyols different than (II).

7. Isocyanate-terminated prepolymer as claimed in any of claims 1 to 6, wherein the isocyanate-reactive compound B) comprises at least 90 wt.-% of (I), (II) or (III).

8. Isocyanate-terminated prepolymer as claimed in any of claims 1 to 6, wherein the isocyanate-reactive compound B) consists of (I), (II) or (III).

9. A process for producing an isocyanate-terminated prepolymer comprising the reaction of a polyisocyanate compound A) with an isocyanate-reactive compound B) and optionally a subsequent step to reduce residual monomer content, wherein
- the polyisocyanate compound A) comprises at least 30 wt.-%, based on the weight of the polyisocyanate compound A), penthamethylene diisocyanate, preferably at least 50 wt.-%, more preferably at least 70 wt.-%, and
- the isocyanate-reactive compound B) comprises at least 80 wt.-%, based on the weight of isocyanate-reactive compounds B), of
(I) poly(1,3-propanediol) with a number average molar mass in the range of from 100 g/mol to 1300 g/mol, or
(II) poly(ε-caprolactone) with an OH-functionality of 2 and a number average molar mass in the range of from 160 g/mol to 800 g/mol, or
(III) any combination of (I) and (II).

10. Process as claimed in claim 10, wherein the isocyanate-reactive compound B) is free of polyester polyols different than (II).

11. Coating composition comprising a prepolymer as claimed in any of claims 1 to 8.

12. Process for preparing a coating on a substrate, comprising the steps:
i) Applying a coating composition as claimed in claim 11 at least on a part of the substrate, and
ii) Curing the coating composition of step i).

13. Substrate coated with a coating obtained by a process as claimed in claim 12.

14. Use of a coating composition as claimed in claim 11 for coating of substrates.

15. Use as claimed in claim 14, wherein the substrate is an aircraft, helicopter, automobile, rotor blades, ship's propeller, car park, roof, balcony, infrastructure or pipe.
